# EUROPEAN PATENT SPECIFICATION

(11) **EP 1 981 196 B1**
(45) Date of publication and mention of the grant of the patent: **03.07.2013**
(21) Application number: 07702163.2
(22) Date of filing: 22.01.2007
(51) Int. Cl.: H04B 10/25, H04J 14/02

(54) **A PASSIVE OPTICAL NETWORK, EQUIPMENT AND METHOD FOR SUPPORTING THE MULTICAST SERVICE**
PASSIVES OPTISCHES NETZWERK, GERÄTE UND VERFAHREN ZUR UNTERSTÜTZUNG DES MULTICAST-DIENSTES
RÉSEAU OPTIQUE PASSIF, ÉQUIPEMENT ET PROCÉDÉ DE PRISE EN CHARGE DE SERVICE DE MULTIDIFFUSION

(30) Priority: 23.01.2006 CN 200610001979
(43) Date of publication of application: 15.10.2008
(73) Proprietor: Huawei Technologies Co., Ltd., Longgang District, Shenzhen Guangdong 518129 (CN)
(72) Inventor: HUANG, Wei, Shenzhen Guangdong 518129 (CN); LIN, Huafeng, Shenzhen Guangdong 518129 (CN); ZHAO, Jun, Shenzhen Guangdong 518129 (CN); WANG, Feng, Shenzhen Guangdong 518129 (CN); JIANG, Tao, Shenzhen Guangdong 518129 (CN); CHEN, Jun, Shenzhen Guangdong 518129 (CN); WANG, Yuntao, Shenzhen Guangdong 518129 (CN); WEI, Guo, Shenzhen Guangdong 518129 (CN)
(74) Representative: Casalonga, Axel
(86) International application number: PCT/CN2007/000233
(87) International publication number: WO 2007/082490

(56) References cited:
- EP-A- 1 608 106
- WO-A-00/74278
- CN-A- 1 547 335
- KR-A- 20020 051 974
- US-A1- 2004 184 806
- US-A1- 2004 184 806
- NAMUK KIM ET AL: "Advanced multicast service scheduling mechanism with IGMP snooping in WDM-PON" ADVANCED COMMUNICATION TECHNOLOGY, 2005, ICACT 2005. THE 7TH INTERNATI ONAL CONFERENCE ON PHOENIX PARK, KOREA FEB. 21-23, 2005, PISCATAWAY, NJ, USA,IEEE, vol. 1, 21 February 2005 (2005-02-21), pages 298-302, XP010813620 ISBN: 978-89-5519-123-3

## Description

### FIELD OF THE INVENTION

The present invention relates to Passive Optical Network (PON) technology, and more particularly to a Wavelength Division Multiplexed Passive Optical Network (WDM-PON) for supporting multicast service, an Optical Line Terminal (OLT) used in the WDM-PON, an Optical Network Unit (ONU), a multiplexer/demultiplexer, and a method for realizing multicast service using the WDM-PON.

### BACKGROUND

With the development of high speed data service, such as video information service with high quality, Video on Demand (VoD), etc., users' requirements for data access bandwidth of an access network is up to about 100Mbps. The current access manners, such as dial-up, Asymmetrical Digital Subscriber Loop (ADSL), etc., could not meet the users' bandwidth requirements, therefore the demand for constructing an access network with fibers increases quickly. The PON is a user access network that could meet the bandwidth requirements for the above high speed data service, which is cost-saved and convenient for operation and maintenance.

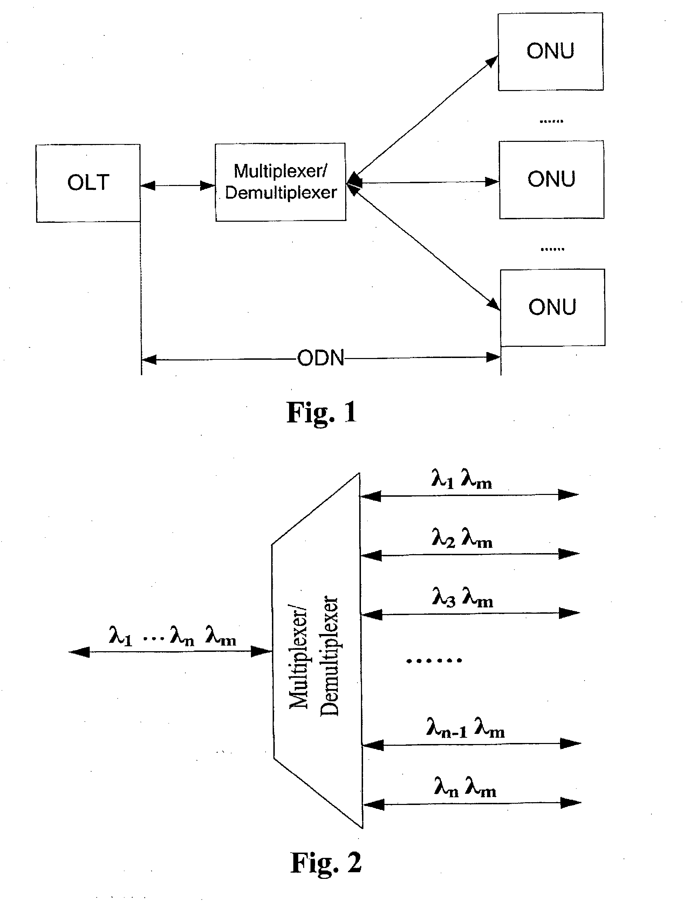

The infrastructure of the current PON is shown in Fig.1. Generally, the PON mainly includes: an OLT located in the central office, an Optical Distribution Network (ODN) and multiple ONUs. The ODN conventionally consists of a multiplexer/demultiplexer and fibers for connecting the multiplexer/demultiplexer with the OLT and ONUs. The multiplexer/demultiplexer is configured to demultiplex an optical signal from the OLT and transmit demultiplexed optical signals to each of the ONUs respectively. The multiplexer/demultiplexer is also configured to multiplex optical signals from each of the ONUs and output a multiplexed optical signal to the OLT.

According to different realization mechanisms, the PON may be classified into a plurality of different types, such as, the Asynchronous Transfer Mode over PON (ATM-PON) which is based on ATM, the Ethernet over PON (EPON) which is based on Ethernet, the Gigabit PON (GPON) which has a rate of gigabits, the WDM-PON which is in combination with WDM technique, the Optical Code Division Multiple Access Passive Optical Network (OCDMA-PON) which is in combination with Code Division Multiple Access (CDMA) technique, etc..

The WDM-PON is of a point-to-point network structure. A point-to-point network conventionally transmits multicast service data in a manner of multiple replication in-band. On one hand, high processing capability of the OLT is required, and a complex multicast protocol is necessary for supporting the multicast service. Particularly, when the same program is demanded by many users, the processing capability of the OLT becomes the bottleneck of the WDM-PON system. On the other hand, because the same data needs to be replicated respectively at different wavelengths so as to be transmitted to different ONUs, the bandwidth resource of the system is wasted.

XP01813620 (NAMUK KIM ET AL: "Advanced multicast service scheduling mechanism with IGMP snooping in WD-PON" ADVANCED COMMUNICATION TECHNOLOGY, 2005, ICACT 2005. THE 7TH INTERNATIONAL CONFERENCE ON PHOENIX PARK, KOREA FEB. 21-23, 2005, PISCATAWAY, NJ, USA, IEEE, vol. 1, 21 February 2005(2005-02-21), pages 298-302, XP010813620 ISBN:978-89-5519-123-3) discloses the multicast service management to efficiently support the broadcasting TV and the near real time high quality VoD (Video On Demand) service through the data communication networks. The Hybrid WDM-PON guarantees both kinds of traffics the independent and stable service by introducing the shared broadcast wavelength for multicast group traffic service. Proposed Dynamic Multicast Group Scheduling (DMGS) based on Hybrid WDM-PON efficiently supports the common internet traffic as well as the large number of multicast groups by maximizing the service share-index of registered multicast groups which uses the broadcast wavelength in real time.

US 2004/184806 A1 (LEE KI-CHEOL [KR] ET AL,23 September 2004) discloses a wavelength division multiplexing-passive optical network (WDM-PON) that enables the integration of broadcast and communication data, in which digital broadcasting and communication services are integrated and transmitted using WDM. An optical line terminal, connected to a broadcasting network and an Internet protocol network, receives a digital broadcast signal from the broadcasting network and a first communication signal from the IP network, and transmits them as a single (broadcast/communication) integrated optical signal after their photoelectric conversion, and further transfers a second communication signal from a service user to the IP network. An optical network terminal/optical network unit on the user side transfers the integrated optical signal from the optical line terminal to the user, and transfers channel-information data of a digital broadcast desired by the user and user data including the second communication signal from the user to the optical line terminal. A first WDM demultiplexer WDM demultiplexes the single signal and transfers it to the optical network terminal/ optical network unit. A first WDM multiplexer WDM-multiplexes the user data and transfer it to the optical line terminal.

WO 00/74278 A ( ADVANCED FIBRE COMM [US], 7 December 2000) discloses a passive optical network PON that supports bidirectional WDM transmission. The downstream information is broadcasted on the PON on a first wavelength. The upstream information from each network unit is carried on the PON on a second wavelength. A broadcast signal can be overlayed on the PON on a third wavelength.

EP-A-1608106 (CIT ALCATEL [FR], 21 December 2005) discloses a system and method for distributing IP video. The method for distributing IP video comprises transmitting an optical data stream in a designated optical band to an optical network terminal ("ONT"), wherein the optical data stream comprises a broadcast IP video signal provided as a packetized video overplay; converting the optical data stream to an electrical data stream at the ONT; and transmitting the electrical data stream to a subscriber.

### SUMMARY

Embodiments of the present invention provide a WDM-PON which can save the bandwidth resource of the system and decrease the requirements for the processing capability of an OLT.

Embodiments of the present invention further provide an OLT, a multiplexer/demultiplexer and an ONU.

Embodiments of the present invention further provide a method for realizing the multicast service and cable TV (CATV) broadcasting, which can decrease the requirements for the processing capability of an OLT and save the bandwidth resource of a WDM-PON system greatly.

A WDM-PON includes an OLT, a multiplexer/demultiplexer and n ONUs. the OLT is configured to modulate and transmit downstream optical signals, wherein the downstream optical signals comprise a downstream optical signal having at least one first wavelength modulated with downstream unicast data and a downstream optical signal having a specific wavelength modulated with multicast service data, capture a request for joining a multicast group from an ONU, implement the function of a multicast agent in which the OLT performs authentication, determine whether the ONU has the right to receive data of the requested multicast group according to the result of the authentication, and send a multicast service control message to the ONU according to the result of the determination;
the multiplexer/demultiplexer is configured to divide the downstream optical signals received from the OLT to obtain an optical signal having a specific wavelength, and output a plurality of channels of optical signals having the specific wavelength by splitting the power on the obtained optical signal having the specific wavelength; and
at least one of the n ONUs is configured to receive optical signals from the multiplexer/demultiplexer and recover the multicast service data from a received optical signal having the specific wavelength, filter multicast service data, which is permitted by the OLT to be received by the ONU, according to the multicast service control message from the OLT, and discard multicast service data, which is not permitted by the OLT to be received by the ONU.

An OLT includes a multicast data transmission pre-processing module, configured to modulate multicast service data onto an optical signal having a first wavelength;
n modulators, each of the n modulators configured to modulate downstream unicast data to be transmitted to an ONU onto an optical signal having one of n wavelengths, wherein the n is a natural number that is larger than or equal to 1and the n wavelength is different from the first wavelength;
a multiplexer/demultiplexer, configured to multiplex the modulated optical signal from the multicast data transmission pre-processing module and the modulated optical signals from the n modulators;
further comprising:
a wide-spectrum laser source, configured to generate a wide-spectrum optical signal;
a first Array Waveguide Grating ,AWG, connected to the n second modulators, the first AWG configured to splitting the wide-spectrum optical signal from the first wide-spectrum laser source to generate n channels of optical signals, each of the n channels of optical signals having one of the n wavelengths; and
a second wide-spectrum laser source, connected to the first AWG, configured to provide a backup wide-spectrum optical signal for the AWG when the first wide-spectrum laser source fails;
wherein the OLT is further configured to capture a request for joining a multicast group from an ONU, implement the function of a multicast agent in which the OLT performs authentication, determine whether the ONU has the right to receive data of the requested multicast group according to the result of the authentication, and send a multicast service control message to the ONU according to the result of the determination.

The ONU according to an embodiment of the present invention includes a coarse wavelength demultiplexer ,CWDM, configured to divide a channel of optical signal having at least two wavelengths from the downstreamoptical signal, a first wavelength of the at least two wavelengths carrying downstream unicast data, and a specific wavelength of the at least two wavelengths carrying multicast service data;
at least two photodiodes, a first photodiode of the at least two photodiodes being configured to convert an optical signal having the first wavelength from the CWDM into a first electrical signal, and a second photodiode of the at lest two photodiodes is configured to convert an optical signal having the specific wavelength into a second electrical signal; and
at least two demodulators, wherein a first demodulator of the at least two demodulators is configured to demodulate the first electrical signal to obtain the downstream unicast data for the ONU, and a second demodulator of the at least two demodulators is configured to demodulate the second electrical signal to obtain the multicast service data;
wherein the ONU is further configured to filter multicast service data, which is permitted by an optical line terminal, OLT, to be received by the ONU, according to a multicast service control message sent from the OLT, and discard multicast service data which is not permitted by the OLT to be received by the ONU.

A method for implementing multicast service in a WDM-PON system includes:
an Optical Line Terminal ,OLT, transmitting an a channel of downstream optical signals having at least two wavelengths to a multiplexer/demultiplexer, a first downstream optical signal having a first wavelength of at least two wavelengths being modulated with downstream unicast data and a second downstream optical signal having a specific wavelength of the at least two wavelengths being modulated with multicast service data;
   n ONUs receiving optical signals from the multiplexer/demultiplexer, wherein the optical signals received by each of at least two of the n ONUs comprise an optical signal having the specific wavelength modulated with multicast service data, and the ONU which receives the optical signals having the specific wavelength modulated with multicast service data recovers the multicast service data;
further comprising:
   the OLT capturing a request for joining a multicast group from an ONU, and implementing the function of a multicast agent in which the OLT performs authentication, determining whether the ONU has the right to receive data of the requested multicast group according to the result of the authentication, and sending a multicast service control message to the ONU according to the result of the determination; and
   the ONU filtering the multicast service data, which is permitted by the OLT to be received by the ONU, according to the multicast service control message from the OLT, and discarding the multicast service data, which is not permitted by the OLT to be received by the ONU.

A method for realizing cable television (CATV) broadcasting in a WDM-PON network includes:
an OLT receiving an optical signal having specific wavelength, which carries a CATV broadcast signal, from an superior equipment;
the OLT amplifying the received optical signal having specific wavelength carrying the CATV broadcast signal, through an optical amplifier;
the OLT multiplexing the optical signal having specific wavelength carrying the CATV broadcast signal, which has been optically amplified, and optical signals carrying downstream unicast data of each of ONUs, and transmitting the multiplexed signal to a multiplexer/demultiplexer;
the multiplexer/demultiplexer separating, from a received optical signal, the optical signal having specific wavelength carrying the CATV broadcast signal and the at least one optical signal carrying the downstream unicast data of each of the ONUs according to wavelength, concurrently outputting the optical signal with specific wavelength carrying the CATV broadcast signal to part or all of the ONUs, and outputting the at least one optical signal carrying the downstream unicast data of each of the ONUs to corresponding ONUs respectively; and
the ONUs separating, from the received optical signals, the optical signal with specific wavelength carrying the CATV broadcast signal and the optical signals carrying their own downstream unicast data, obtaining an electrical CATV broadcast signal after performing optical/electrical conversion on the optical signal with specific wavelength carrying the CATV broadcast signal, and transmitting the electrical signal to a lower stage equipment for further process, meanwhile, obtaining their own downstream unicast data after performing optical/electrical conversion on the optical signals carrying their own downstream unicast data, and transmitting the electrical signals to a lower stage equipment for further process.

It can be seen from the above that, in the WDM-PON system according to the embodiments of the present invention and in the process for realizing multicast service according to the method of the embodiments of the present invention, multicast service can be carried onto one or more optical signals having specific wavelengths, and thus the problem of the wasting of the bandwidth resource caused by the manner of in-band multiple replicas in the related art can be effectively solved, and the bandwidth resource of the system can be effectively saved. Moreover, because there is no need to support a complex multicast protocol in the OLT in the WDM-PON system, the complexity of the OLT can be reduced.

Furthermore, because, conventionally, the traffic of multicast service is large and its priority is high, the quality of service of other real-time services (for example, VOIP) can be ensured by separating multicast service to use a single wavelength for transmission, thereby the quality of service of the WDM-PON system can be ensured much better.

### BRIEF DESCRIPTION OF THE DRAWING(S)

Fig.1 is a schematic diagram of the infrastructure of the current PON system;

Fig.2 is a schematic diagram of the function of a multiplexer/demultiplexer used in a WDM-PON according to a preferred embodiment of the present invention;

Fig.3 is a schematic diagram of the infrastructure of a WDM-PON according to a preferred embodiment of the present invention;

Fig.4 is a schematic diagram of the system structure for realizing multicast service in a WDM-PON according to another preferred embodiment of the present invention;

Fig.5 is a schematic diagram of the system structure for realizing CATV service and multicast service in a WDM-PON according to another preferred embodiment of the present invention;

Fig.6 is a schematic diagram of the internal structure of a multiplexer/demultiplexer according to a preferred embodiment of the present invention;

Fig.7 is a schematic diagram of the internal structure of a multiplexer/demultiplexer according to another preferred embodiment of the present invention; and

Fig.8 is a flowchart of a method for realizing multicast service according to a preferred embodiment of the present invention.

### DETAILED DESCRIPTION

In order to clarify the objects, technical solutions and advantages of the present invention, detailed descriptions to the embodiments of the present invention are provided below with reference to the accompanying drawings.

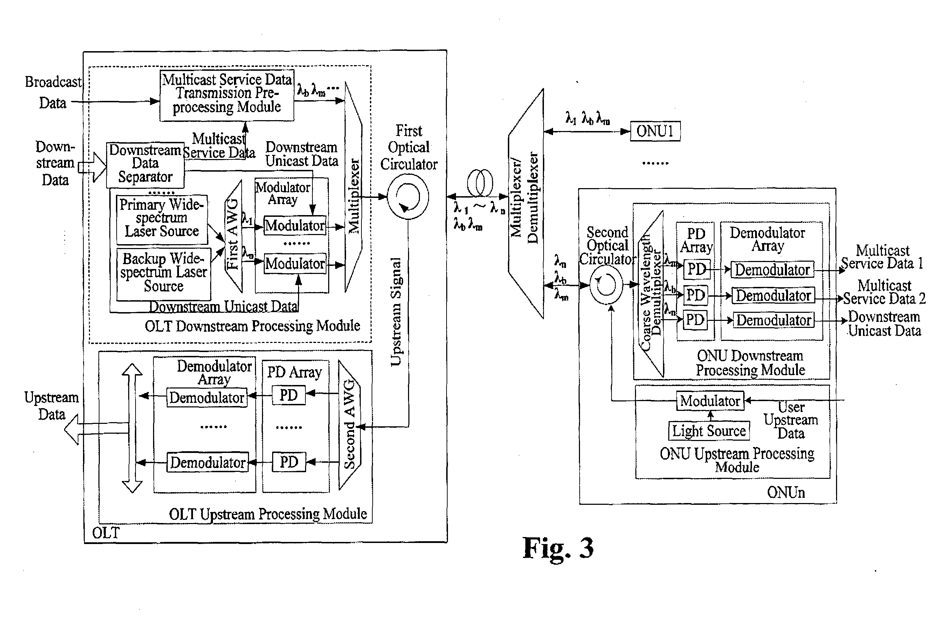

A preferred embodiment of the present invention provides a WDM-PON system for supporting multicast service, for example, a WDM-PON system for supporting multicast service and/or broadcast service and/or cable television (CATV) service. Fig.3 shows the infrastructure of the WDM-PON system according to the embodiment. As shown in Fig.3, the WDM-PON system mainly includes: an OLT, a multiplexer/demultiplexer, *n* ONUs and fibers connecting the OLT, the multiplexer/demultiplexer and the n ONUs, where *n* is a natural number.

In the downstream direction, the OLT is configured to carry *n* channels of downstream unicast data to be respectively transmitted to the *n* ONUs into *n* optical signals respectively having different wavelengths, carry one or more channels of multicast service data into one or more optical signals respectively having specific wavelengths, multiplex the optical signals respectively having different wavelengths and the optical signals having specific wavelengths into one optical signal, and output the one optical signal to the multiplexer/demultiplexer. In the upstream direction, the OLT is configured to separate upstream optical signals from each of the ONUs, recover upstream data of each of the users after performing detection and demodulation on the upstream optical signals, and output the retrieved upstream data to a superior equipment.

The function of the multiplexer/demultiplexer is shown in Fig.2. In the downstream direction, the multiplexer/demultiplexer is configured to: separate the optical signals having different wavelengths received from the OLT; perform power allocation or power splitting on an optical signal having specific wavelength which carries multicast service, such as an optical signal having a wavelength of λₘ, that is, concurrently output the optical signal having specific wavelength through part or all of output terminals; and selectively outputting, according to wavelength, *n* channels of the optical signals having other wavelengths which carry downstream unicast data of each of the ONUs respectively, that is, output the optical signals of different wavelengths through predetermined corresponding output terminals respectively. In the upstream direction, the multiplexer/demultiplexer is configured to multiplex *n* channels of upstream signals, which have different wavelengths and are from different ONUs respectively, to obtain an optical signal, and output the optical signal to the OLT.

In the downstream direction, an ONU is configured to process a signal from one of the output terminals of the multiplexer/demultiplexer to obtain the multicast service data and the downstream unicast data corresponding to the ONU respectively. In the upstream direction, the ONU is configured to carry its upstream data onto an optical signal having predetermined wavelength, and output the optical signal to the multiplexer/demultiplexer.

Still referring to Fig.3, the OLT further includes an OLT downstream processing module, an OLT upstream processing module and a first optical circulator.

The first optical circulator is connected to the OLT downstream processing module, the OLT upstream processing module and the multiplexer/demultiplexer, and is configured to output the downstream optical signal from the OLT downstream processing module to the multiplexer/demultiplexer, and output the upstream optical signal from the multiplexer/demultiplexer to the OLT upstream processing module.

The OLT downstream processing module includes a downstream data separator, configured to separate, from downstream service data, the multicast service data and *n* channels of downstream unicast data respectively transmitted to the *n* ONUs.

The OLT downstream processing module further includes a multicast service data transmission pre-processing module which is configured to receive broadcast data (for example, the CATV signal) from the superior equipment and/or multicast service data from the downstream data separator, and perform process and amplification on the broadcast data and/or multicast service data to obtain one or more optical signals having one or more specific wavelengths, which carry one or more channels of the multicast service data.

The multicast service data transmission pre-processing module optically amplifies the optical signal from the superior equipment, which carries the broadcast data, directly by an optical amplifier. For the one or more channels of the multicast service data from the downstream data separator, the multicast service data transmission pre-processing module modulates the multicast service data into one or more optical signals having specific wavelengths, and performs related processes to the modulated optical signals. Accordingly, the multicast service data transmission pre-processing module further includes an optical amplifier for optically amplifying the broadcast data, and/or one or more lasers for generating optical signals having specific wavelengths, and one or more modulators for modulating the multicast service data into the optical signals having specific wavelengths. The functions of the lasers and the modulators could be implemented in a separate Direct Modulation Laser (DML).

The OLT downstream processing module further includes a primary wide-spectrum laser source for generating a wide-spectrum optical signal.

To ensure the reliability of the system, the WDM-PON may further include an alternate wide-spectrum laser source for providing backup wide-spectrum optical signals when the primary wide-spectrum laser source fails.

The OLT downstream processing module further includes a first Array Waveguide Grating (AWG) which is configured to process a wide-spectrum optical signal outputted from the primary wide-spectrum laser source or backup wide-spectrum laser source to generate *n* channels of optical signals, each of which has respective wavelength among the wavelengths of λ₁∼λₙ, thus providing laser sources having different wavelengths for an optical modulator array.

The OLT downstream processing module further includes an optical modulator array including *n* modulators, which is configured to modulate the downstream unicast data corresponding to the *n* ONUs from the downstream data separator into the *n* channels of optical signals, which are outputted from the first AWG and have wavelengths of λ₁∼λₙ, respectively.

The OLT downstream processing module further includes a multiplexer. The multiplexer is configured to multiplex the one or more optical signals having special wavelengths (for example, λₘ, λ_{b} and so on) and *n* channels of optical signals having the wavelengths of λ₁∼λₙ respectively, into an optical signal; and output the multiplexed optical signal to the first optical circulator. The one or more optical signals having special wavelengths (for example, λₘ, λ_{b} and so on) may carry the multicast service data; and the *n* channels of optical signals may carry the downstream unicast data of the *n* ONUs, respectively. The multiplexer may be a coupler, an AWG or other multiplexing equipments.

The OLT upstream processing module includes a second AWG, which is configured to divide the upstream optical signal of the first optical circulator to obtain *n* channels of optical signals, which have wavelengths of λ₁~λₙ respectively.

The OLT upstream processing module further includes a Photodiode or Photo Detector (PD) array, i.e., PD array. The PD array includes *n* PDs configured to convert one channel of upstream optical signal from the second AWG to an electrical signal respectively.

The OLT upstream processing module further includes a demodulator array. The demodulator array consists of *n* demodulators, which are configured to demodulate electrical signals outputted from the Photodiode or PD array and recover the upstream data of each of the ONUs, respectively.

The ONU in the WDM-PON shown in Fig.3 includes an ONU downstream processing module, an ONU upstream processing module and a second optical circulator.

The second optical circulator is connected to the ONU upstream processing module, the ONU downstream processing module and the multiplexer/demultiplexer. The second optical circulator is configured to output an upstream optical signal from the ONU upstream processing module to the multiplexer/demultiplexer, and output a downstream optical signal from the multiplexer/demultiplexer to the ONU downstream processing module.

The ONU downstream processing module includes a coarse wavelength demultiplexer. The coarse wavelength demultiplexer is configured to divide an optical signal outputted from the multiplexer/demultiplexer to obtain the optical signals having different wavelengths. The divided optical signals include an optical signal having a wavelength among λ₁~λₙ and optical signals having specific wavelengths, such as λₘ and/or λ_{b}. The optical signal having a wavelength among λ₁~λₙ is used for carrying downstream unicast data corresponding to the ONU, and the optical signals having specific wavelengths are used for carrying multicast service.

The ONU downstream processing module further includes a PD array consisting of a plurality of PDs, the number of which is determined based on the number of multicast services. If *x* channels of multicast service are carried, the PD array may include *x*+1 PDs, in which, one of the PDs is configured to convert the optical signal carrying downstream unicast data corresponding to the ONU, among the optical signals having wavelengths of λ₁~λₙ from the coarse wavelength demultiplexer, into an electrical signal, and another x PDs are respectively configured to convert the optical signals having specific wavelengths from the coarse wavelength demultiplexer, which carry channels of the multicast services, into electrical signals.

The ONU downstream processing module further includes a demodulator array consisting of a plurality of demodulators, the number of which corresponds to the number of the PDs in the PD array. One of the demodulators is configured to demodulate the electrical signal carrying the downstream unicast data of the ONU to obtain the downstream unicast data of the ONU, and another demodulators are respectively configured to demodulate the electrical signals outputted from the PD array, which carry channels of the multicast service data, to obtain each channel of the multicast service data.

The ONU upstream processing module includes a modulator, which is configured to modulate the upstream data of the ONU into an optical signal.

The optical signal is necessary for the ONU to transmit the upstream data. The optical signal may be either from the OLT or generated by the ONU itself. If the optical signal is generated by the ONU itself, the ONU upstream processing module needs to include a light source, as shown in Fig.3.

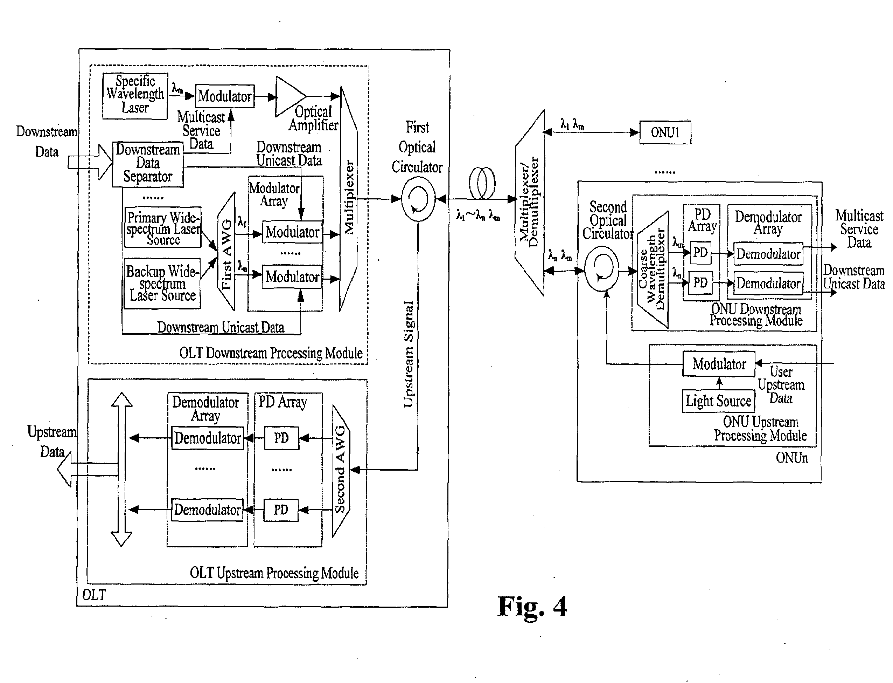

A dynamic operating process for realizing multicast service by the WDM-PON is described, in combination with Fig.4, through another preferred embodiment of the invention.

As shown in Fig.4, in the OLT, the process for realizing multicast service using the WDM-PON includes: multicast service data is firstly extracted from data stream from the superior equipment by the downstream data separator; the extracted multicast service data is modulated by the modulator into an optical signal having the wavelength of λₘ outputted from a specific wavelength laser; the modulated optical signal is amplified by an optical amplifier; and the amplified optical signal having the wavelength of λₘ, which carries the multicast service data, is multiplexed by the multiplexer with the *n* channels of optical signals, which have the wavelengths of λ₁∼λₙ respectively and carry the downstream unicast data of each of the ONUs respectively, so as to obtain a multiple-wavelength optical signal having the wavelengths of λ₁∼λₙ and λₘ; and the multiple-wavelength optical signal is transmitted to the multiplexer/demultiplexer through the first optical circulator. The above specific wavelength laser, modulator and optical amplifier constitute the multicast service data transmission pre-processing module shown in Fig.3.

The multiplexer/demultiplexer divides the received optical signal to obtain optical signals at different wavelengths, concurrently outputs the optical signal having the wavelength of λₘ, which carries the multicast service data, through *n* output terminals; and outputs the n channels of optical signals, which have the wavelengths of λ₁∼λₙ respectively and carry the downstream unicast data of each of the ONUs respectively, to corresponding output terminals, respectively. As such, the optical signal respectively outputted from each of the output terminals of the multiplexer/demultiplexer at least includes the optical signal having the wavelength of λₘ and one channel of optical signal among the optical signals having the wavelengths of λ₁∼λₙ. The optical signal having the wavelength of λₘ carries the multicast service data; and the optical signals having the wavelengths of λ₁∼λₙ carry the downstream unicast data of each of the ONUs, respectively. For example, the optical signal outputted from the output terminal 1 includes two wavelengths of λ₁ and λₘ, the optical signal outputted from the output terminal 2 includes two wavelengths of λ₂ and λₘ, ..., and the optical signal outputted from the output terminal n includes two wavelengths of λₙ and λₘ. Subsequently, the *n* output signals are transmitted to the *n* ONUs of the WDM-PON system respectively.

In each of the ONUs, the ONU downstream processing module divides the optical signal from the multiplexer/demultiplexer to obtain the optical signal having the wavelength of λ_{m,}, which carries the multicast service data, and one channel of optical signal carrying the downstream unicast data of the ONU among the optical signals having the wavelengths of λ₁∼λₙ. After the two channels of optical signals are converted into electrical signals and further demodulated respectively, the multicast service data and the unicast data corresponding to the ONU itself could be obtained.

Meanwhile, in order to realize the multicast service, the OLT is capable of capturing a request for joining a multicast group from an ONU, and implementing the function of a multicast agent in which the OLT determines, according to the result of the authentication returned from an superior multicast server, whether the ONU has the right to receive data of the requested multicast group, and sends a multicast service control message to the ONU according to the result of the determination. The ONU filters data of the multicast group, which is permitted by the OLT to be received by the ONU, according to the multicast service control message from the OLT, and discards data of the multicast group, which is not permitted by the OLT to be received by the ONU. After the ONU filters the data of the multicast group permitted by the OLT, the data of the multicast group is transmitted to a subordinate equipment for further process.

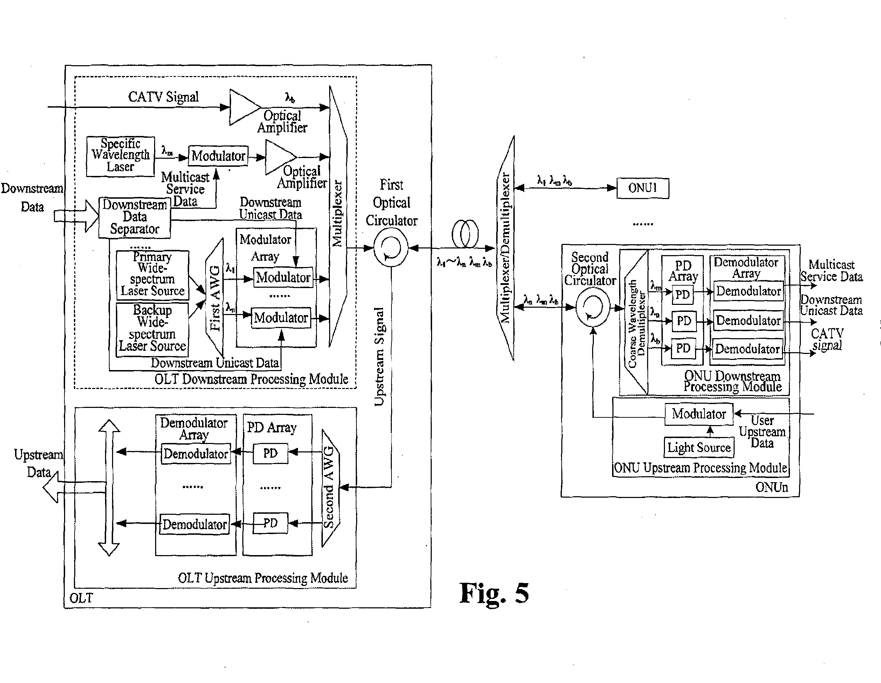

The WDM-PON system shown in Fig.3 may further provide CATV service. Fig.5 shows a schematic diagram of the system structure of a WDM-PON capable of concurrently providing CATV service and multicast service according to another preferred embodiment of the present invention.

As shown in Fig.5, the WDM-PON, which provides CATV service and multicast service for the ONUs, is made the following improvements on the basis of the structure as shown in Fig.4.

For the OLT, an optical amplifier for connecting the outputting terminal to the multiplexer is added to amplify an optical signal having the wavelength of λ_{b}, which carries a CATV signal from the outside. As shown in Fig.5, the specific wavelength laser, the modulator, the optical amplifier connected to the modulator and the optical amplifier for amplifying the CATV signal constitute the multicast service data transmission pre-processing module shown in Fig.3.

For the multiplexer/demultiplexer, in the downstream direction, the multiplexer/demultiplexer further performs power allocation on the optical signal having the specific wavelength, i.e., λ_{b}, which carries the CATV signal, among the optical signals from the OLT. That is, the optical signal with the specific wavelength of λ_{b} is concurrently outputted to each of the output terminals. As such, the optical signal outputted from each output terminal of the multiplexer/demultiplexer includes the optical signal with the wavelength of λₘ which carries the multicast data, the optical signal with the wavelength of λ_{b} which carries the CATV signal, and one channel of optical signal among the optical signals having the wavelengths of λ₁∼λₙ which carry the downstream unicast data of each of the ONUs.

Furthermore, for the ONU, the optical signal having the wavelength of λ_{b} which carries the CATV signal is divided by the coarse wavelength division multiplexer. The PD array and the modulator array further include a PD and a modulator for performing optical/electrical conversion and demodulation to the optical signal having the wavelength of λ_{b}, which carries the CATV signal, so as to obtain the CATV data at each of the ONUs.

In the process for realizing CATV service, the OLT may realize controllable receipt of CATV service in a similar manner with that for realizing multicast service, such as by transmitting a broadcast control message.

It can be seen from the above process for realizing multicast service, the WDM-PON system may realize multicast or broadcast service. Further, because only one or more divided wavelengths are used for carrying one or more channels of the multicast service data in the above WDM-PON system, the problem in the related art that the number of replicas needs to be consistent with the number of users to whom the multicast service data is to be transmitted can be effectively avoided, thereby the bandwidth resource of the WDM-PON system can be greatly saved. Further, the load scheduled by the OLT can be reduced, and there is no need to support a complex multicast scheduling protocol in the OLT, thereby the complexity of the system is reduced.

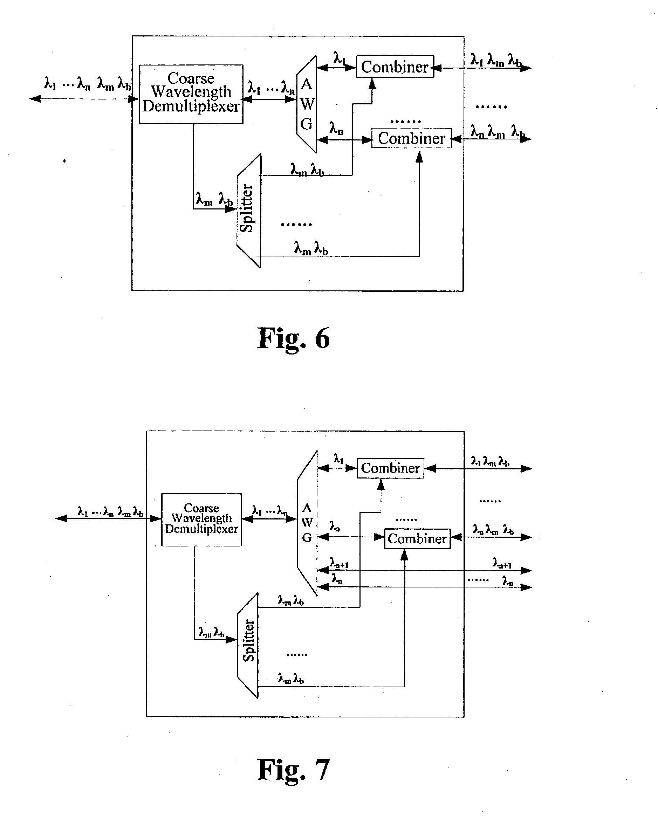

It can be seen from the above embodiments that the multiplexer/demultiplexer used in the present WDM-PON system is different from that used in the related WDM-PON system. In order to realize the present WDM-PON system, in a preferred embodiment of the present invention, a novel multiplexer/demultiplexer is provided, which is used in the above WDM-PON system, has the function of an AWG, and is capable of broadcasting optical signals having some specific wavelengths. Fig.6 shows the structure of such multiplexer/demultiplexer.

As shown in Fig.6, the multiplexer/demultiplexer in the present embodiment includes a coarse wavelength demultiplexer, which is configured to divide the received optical signals to obtain optical signals having specific wavelengths (for example, λ_{b} and/or λₘ and/or other specific wavelengths) carrying the multicast service and optical signals carrying the downstream unicast data of each of the ONUs.

The multiplexer/demultiplexer further includes a 1:*n* AWG, being configured to divide the optical signals with the wavelengths of λ₁∼λₙ from the coarse wavelength demultiplexer to obtain *n* channels of optical signals respectively having respective wavelength among the wavelengths of λ₁∼λₙ, and route the optical signals to the *n* output terminals of the AWG, where *n* corresponds to the number of the ONUs in the WDM-PON system.

The multiplexer/demultiplexer further includes a splitter having a splitting ratio of 1:*n*. The splitter is configured to perform power allocation on the optical signals having specific wavelengths (for example, λ_{b} and/or λₘ and/or other specific wavelengths) from the coarse wavelength demultiplexer, split the power of the optical signals into *n* portions, and output the *n* portions of the split optical signals to *n* combiners respectively.

The multiplexer/demultiplexer further includes *n* combiners, each of which is connected to one output terminal of the AWG and one output terminal of the splitter, for coupling the optical signals having specific wavelengths from the splitter to each of the output branches of the AWG.

It can be seen from the above that both the optical signals having specific wavelengths (for example, λ_{b} and/or λₘ and/or other specific wavelengths), which carry the multicast service, and the *n* channels of the optical signals, which carry the unicast data of each of the ONUs, could be obtained at each of the *n* output terminals of the multiplexer/demultiplexer shown in Fig. 6, therefore the multiplexer/demultiplexer can be used to the WDM-PON system.

It should be understood for a person skilled in the art that other alternative solutions can be used to substitute the multiplexer/demultiplexer in the present embodiment. For example, the functions of the coarse wavelength demultiplexer, the splitter and the combiners may be integrated into a separate AWG, and the multiplexer/demultiplexer may be realized with the coarse wavelength demultiplexer, the splitter, the combiners, a N:N Wavelength Grating Router (WGR), etc..

As stated above, each of the *n* output terminals of the multiplexer/demultiplexer in Fig.6 includes the optical signals having specific wavelengths for carrying the multicast service. However, in some special circumstances, some ONUs in the WDM-PON system may not support the multicast service, and thus it is not necessary to concurrently output the multicast service to all of the output terminals of the multiplexer/demultiplexer. A simplified multiplexer/demultiplexer according to another preferred embodiment of the present invention is provided in Fig.7. The multiplexer/demultiplexer includes a coarse wavelength demultiplexer, which is configured to divide the received optical signals to obtain optical signals having specific wavelengths (for example, λ_{b} and/or λₘ and/or other specific wavelengths) for carrying the multicast service and optical signals for carrying the downstream unicast data of each of the ONUs.

The multiplexer/demultiplexer further includes a 1:*n* AWG, which is configured to divide the optical signals having the wavelengths of λ₁∼λₙ from the coarse wavelength demultiplexer to obtain *n* channels of optical signals respectively having respective wavelength among the wavelengths of λ₁∼λₙ, and route the optical signals to the *n* output terminals of the AWG, where *n* corresponds to the number of the ONUs in the WDM-PON system.

The multiplexer/demultiplexer further includes a splitter having a splitting ratio of 1:*a*. The splitter is configured to perform power allocation on the optical signals having specific wavelengths (for example, λ_{b} and/or λₘ) from the coarse wavelength demultiplexer, split the power of the optical signals into *a* portions, and output the *a* portions of the split optical signals to *a* combiners respectively, where *a* is a natural number that is larger than or equal to 1 and smaller than n and corresponds to the number of the ONUs supporting the multicast service in the WDM-PON system.

The multiplexer/demultiplexer further includes *a* combiners, each of which is connected to one output terminal of the AWG and one output terminal of the splitter, for coupling the optical signals having specific wavelengths from the splitter to *a* output branches of the AWG.

It can be seen from the above that because the above multiplexer/demultiplexer may concurrently transmit the optical signals carrying the multicast service to each ONU of the WDM-PON system by performing power allocation, it is possible to transmit multicast or broadcast data at a separate wavelength, thereby the bandwidth resource of the system can be greatly saved.

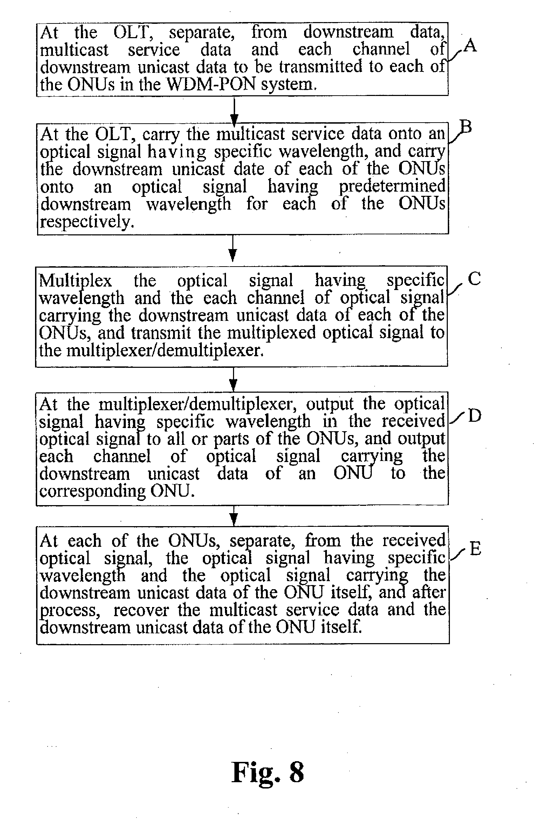

Besides the above WDM-PON system and multiplexer/demultiplexer, a method for realizing the multicast service using the WDM-PON system is provided according to another preferred embodiment of the invention. As shown in Fig.8, the method mainly includes the following steps.

Step A: the OLT separates, from downstream data from the superior equipment, multicast service data and each channel of downstream unicast data to be transmitted to each of the ONUs in the WDM-PON system.

Step B: the OLT carries the multicast service data onto an optical signal having specific wavelength, and carries the downstream unicast date of each of the ONUs onto an optical signal having predetermined downstream wavelength for each of the ONUs respectively.

Step C: the optical signal having specific wavelength and the each channel of optical signal carrying the downstream unicast data of each of the ONUs are multiplexed and transmitted to the multiplexer/demultiplexer in the ONU.

Step D: the multiplexer/demultiplexer separates, from the received optical signal, the optical signal having specific wavelength and each channel of optical signal carrying the downstream unicast data for each of the ONUs according to wavelength, outputs the optical signal having specific wavelength to all or parts of the ONUs, and outputs each channel of optical signal carrying the downstream unicast data of an ONU to the corresponding ONU.

Step E: each of the ONUs in the WDM-PON system separates, from the received optical signal, the optical signal having specific wavelength and the optical signal carrying the downstream unicast data of the ONU itself, performing optical/electrical conversion and demodulation to both of the optical signals to obtain the multicast service data and the downstream unicast data of the ONU itself, and transmits the multicast service data to the lower equipment for further process.

Furthermore, as stated above, the OLT can control whether an ONU can receive the multicast service data, by transmitting a corresponding control message to the ONU.

The multicast service may be general multicast service, broadcast service, or CATV service. Particularly, for CATV service, the OLT transmits a broadcast control message to the ONU to prohibit the ONU from receiving the CATV broadcast signal or permit the ONU to receive the CATV broadcast signal. After receiving the broadcast control message, if the broadcast control message prohibits the ONU from receiving the CATV broadcast signal, the ONU turns off an optical/electrical converter so as not to receive the CATV broadcast signal, and if the broadcast control message permits the ONU to receive the CATV broadcast signal, the ONU turns on the optical/electrical converter so as to receive the CATV broadcast signal.

It can be seen from the above that, through the method, the multicast or broadcast can be realized in the WDM-PON system. Because the multicast service is only transmitted once at a specific wavelength in the WDM-PON system, the problem of the wasting of the bandwidth resource caused by the manner of bandwidth multiple replicas in the related art can be solved. The bandwidth resource of the system can be greatly saved, and the complexity of the OLT can be reduced for there is no need to apply a complex multicast protocol in the OLT.

## Claims

1. A Passive Optical Network ,PON system, comprising an Optical Line Terminal ,OLT, a multiplexer/demultiplexer and *n* Optical Network Units ,ONUs, *n* being a natural number, wherein
the OLT is configured to modulate and transmit downstream optical signals, wherein the downstream optical signals comprise a downstream optical signal having at least one first wavelength modulated with downstream unicast data and a downstream optical signal having a specific wavelength modulated with multicast service data, and **characterised in that** the OLT is also configured to capture a request for joining a multicast group from an ONU, implement the function of a multicast agent in which the OLT performs authentication, determine whether the ONU has the right to receive data of the requested multicast group according to the result of the authentication, and send a multicast service control message to the ONU according to the result of the determination;
the multiplexer/demultiplexer is configured to divide the downstream optical signals received from the OLT to obtain an optical signal having a specific wavelength, and output a plurality of channels of optical signals having the specific wavelength by splitting the power on the obtained optical signal having the specific wavelength; and
at least one of the *n* ONUs is configured to receive optical signals from the multiplexer/demultiplexer and recover the multicast service data from a received optical signal having the specific wavelength, filter multicast service data, which is permitted by the OLT to be received by the ONU, according to the multicast service control message from the OLT, and discard multicast service data, which is not permitted by the OLT to be received by the ONU.

2. The PON system according to claim 1, wherein the OLT is further configured to receive from a superior equipment an optical signal having a second wavelength which carries a CATV broadcast signal, amplify the received optical signal having the second wavelength through an optical amplifier, and transmit the amplified optical signal having the second wavelength to the multiplexer/demultiplexer.

3. An Optical Line Terminal ,OLT, comprising:
a multicast data transmission pre-processing module, configured to modulate multicast service data onto an optical signal having a first wavelength;
n modulators, each of the n modulators configured to modulate downstream unicast data to be transmitted to an ONU onto an optical signal having one of n wavelengths, wherein the n is a natural number that is larger than or equal to 1 and the n wavelength is different from the first wavelength;
a multiplexer/demultiplexer, configured to multiplex the modulated optical signal from the multicast data transmission pre-processing module and the modulated optical signals from the n modulators;
**characterized by** further comprising:
a wide-spectrum laser source, configured to generate a wide-spectrum optical signal;
a first Array Waveguide Grating ,AWG, connected to the n second modulators, the first AWG configured to splitting the wide-spectrum optical signal from the first wide-spectrum laser source to generate *n* channels of optical signals, each of the n channels of optical signals having one of the n wavelengths; and
a second wide-spectrum laser source, connected to the first AWG, configured to provide a backup wide-spectrum optical signal for the AWG when the first wide-spectrum laser source fails;
wherein the OLT is further configured to capture a request for joining a multicast group from an ONU, implement the function of a multicast agent in which the OLT performs authentication, determine whether the ONU has the right to receive data of the requested multicast group according to the result of the authentication, and send a multicast service control message to the ONU according to the result of the determination.

4. The OLT according to claim 3, the OLT further comprising:
a downstream data separator, connected to the multicast data transmission pre-processing module, the downstream data separator configured to separate the downstream service data to obtain the multicast service data to be broadcasted or multicasted and the downstream unicast data to be respectively transmitted to the *n* ONUs.

5. An Optical Network Unit, ONU, **characterized by** comprising:
a coarse wavelength demultiplexer ,CWDM, configured to divide a channel of optical signal having at least two wavelengths from the downstream optical signal, a first wavelength of the at least two wavelengths carrying downstream unicast data, and a specific wavelength of the at least two wavelengths carrying multicast service data;
at lest two photodiodes, a first photodiode of the at lest two photodiodes being configured to convert an optical signal having the first wavelength from the CWDM into a first electrical signal, and a second photodiode of the at lest two photodiodes is configured to convert an optical signal having the specific wavelength into a second electrical signal; and
at least two demodulators, wherein a first demodulator of the at least two demodulators is configured to demodulate the first electrical signal to obtain the downstream unicast data for the ONU, and a second demodulator of the at least two demodulators is configured to demodulate the second electrical signal to obtain the multicast service data;
and **characterised in that** the the ONU is further configured to filter multicast service data, which is permitted by an optical line terminal, OLT, to be received by the ONU, according to a multicast service control message sent from the OLT, and discard multicast service data which is not permitted by the OLT to be received by the ONU.

6. The ONU according to claim 5, further comprising a second optical circulator and an ONU upstream processing module; wherein,
the ONU upstream processing module is configured to modulate upstream data onto an optical signal having a corresponding wavelength;
the second optical circulator, connected to a multiplexer/demultiplexer, the CWDM and the ONU upstream processing module, is configured to output the channel of optical signal having at least two wavelengths from a downstream optical signal received from the multiplexer/demultiplexer to the coarse wavelength demultiplexer, and output a upstream optical signal from the ONU upstream processing module to the multiplexer/demultiplexer.

7. A method for implementing service in a Passive Optical Network ,PON, comprising:
an Optical Line Terminal ,OLT, transmitting an a channel of downstream optical signals having at least two wavelengths to a multiplexer/demultiplexer, a first downstream optical signal having a first wavelength of at least two wavelengths being modulated with downstream unicast data and a second downstream optical signal having a specific wavelength of the at least two wavelengths being modulated with multicast service data;
n ONUs receiving optical signals from the multiplexer/demultiplexer, wherein the optical signals received by each of at least two of the n ONUs comprise an optical signal having the specific wavelength modulated with multicast service data, and the ONU which receives the optical signals having the specific wavelength modulated with multicast service data recovers the multicast service data;
**characterized by** further comprising:
the OLT capturing a request for joining a multicast group from an ONU, and implementing the function of a multicast agent in which the OLT performs authentication, determining whether the ONU has the right to receive data of the requested multicast group according to the result of the authentication, and sending a multicast service control message to the ONU according to the result of the determination; and
the ONU filtering the multicast service data, which is permitted by the OLT to be received by the ONU, according to the multicast service control message from the OLT, and discarding the multicast service data, which is not permitted by the OLT to be received by the ONU.

8. The method for implementing multicast service according to claim 7, further comprising:
the OLT receiving from a superior equipment an optical signal having a second wavelength, which carries a CATV broadcast signal, amplifying the received optical signal having the second wavelength through an optical amplifier, and transmitting the amplified optical signal having the second wavelength to the multiplexer/demultiplexer; transmitting a broadcast control message to the ONU to prohibit the ONU from receiving the CATV broadcast signal or permit the ONU to receive the CATV broadcast signal;
cach of at least two of the n ONUs receiving optical signals comprising an optical signal having the second wavelength and recovering the CATV broadcast signal, wherein after receiving the broadcast control message, if the broadcast control message prohibits the ONU from receiving the CATV broadcast signal, the ONU turns off an optical/electrical converter so as not to receive the CATV broadcast signal, and if the broadcast control message permits the ONU to receive the CATV broadcast signal, the ONU turns on the optical/electrical converter so as to receive the CATV broadcast signal.

## Patentansprüche

1. Passives optisches Netzwerk- bzw. PON-System mit einem optischen Leitungsendgerät, OLT, einem Multiplexer/Demultiplexer und n optischen Netzwerkeinheiten, ONU, wobei n eine natürliche Zahl ist, wobei das OLT konfiguriert ist, optische Abwärtsstreckensignale zu modulieren und zu übertragen, wobei die optischen Abwärtsstreckensignale ein optisches Abwärtsstreckensignal, das mindestens eine erste Wellenlänge aufweist, die mit Abwärtsstrecken-Unicast-Daten moduliert ist, und ein optisches Abwärtsstreckensignal aufweisen, das eine spezifische Wellenlänge aufweist, die mit Multicast-Dienstdaten moduliert ist, und **dadurch gekennzeichnet ist, dass** das OLT außerdem konfiguriert ist, eine Anforderung von einer ONU zu erfassen, einer Multicast-Gruppe beizutreten, die Funktion eines Multicast-Agenten zu implementieren, in dem das OLT eine Authentifizierung durchführt, gemäß dem Resultat der Authentifizierung festzustellen, ob die ONU das Recht hat, Daten der angeforderten Multicast-Gruppe zu empfangen, und gemäß dem Resultat der Feststellung eine Multicast-Dienststeuermeldung an die ONU zu senden;
der Multiplexer/Demultiplexer konfiguriert ist, die vom OLT empfangenen optischen Abwärtsstreckensignale aufzuteilen, um ein optisches Signal zu erhalten, das eine spezifische Wellenlänge aufweist, und mehrere Kanäle von optischen Signalen, die die spezifische Wellenlänge aufweisen, durch Aufspalten der Leistung über das erhaltene optische Signal auszugeben, das die spezifische Wellenlänge aufweist; und mindestens eine der n ONU konfiguriert ist, optische Signale vom Multiplexer/Demultiplexer zu empfangen und die Multicast-Dienstdaten aus einem empfangenen optischen Signal zurückzugewinnen, das die spezifische Wellenlänge aufweist, Multicast-Dienstdaten, deren Empfang durch die ONU vom OLT erlaubt ist, gemäß der Multicast-Dienststeuermeldung vom OLT zu filtern und Multicast-Dienstdaten zu verwerfen, deren Empfang durch die ONU vom OLT nicht erlaubt ist.

2. PON-System nach Anspruch 1, wobei das OLT ferner konfiguriert ist, von einem übergeordneten Gerät ein optisches Signal zu empfangen, das eine zweite Wellenlänge aufweist, das ein CATV-Broadcast-Signal führt, das empfangene optische Signal, das die zweite Wellenlänge aufweist, durch einen optischen Verstärker zu verstärken und das verstärkte optische Signal, das die zweite Wellenlänge aufweist, zum Multiplexer/Demultiplexer zu übertragen.

3. Optisches Leitungsendgerät, OLT, mit:
einem Multicast-Datenübertragungsvorverarbeitungsmodul, das konfiguriert ist,
Multicast-Dienstdaten auf ein optisches Signal mit einer ersten Wellenlänge zu modulieren;
n Modulatoren, wobei jeder der n Modulatoren konfiguriert ist, Abwärtsstrecken-Unicast-Daten, die zu einer ONU übertragen werden sollen, auf ein optisches Signal zu modulieren, das eine von n Wellenlängen aufweist, wobei n eine natürliche Zahl ist, die größer oder gleich 1 ist, und sich die n-te Wellenlänge von der ersten Wellenlänge unterscheidet;
einem Multiplexer/Demultiplexer, der konfiguriert ist, das modulierte optische Signal aus dem Multicast-Datenübertragungsvorverarbeitungsmodul und die modulierten optischen Signale aus den n Modulatoren zu multiplexen;
**dadurch gekennzeichnet, dass** es ferner Folgendes aufweist:
eine Breitspektrum-Laserquelle, die konfiguriert ist, ein optisches Breitspektrum-Signal zu erzeugen;
ein erstes Array-Waveguide Grating, AWG, das mit den n zweiten Modulatoren verbunden ist, wobei das erste AWG konfiguriert ist, das optische Breitspektrum-Signal aus der ersten Breitspektrum-Laserquelle aufzuspalten, um n Kanäle optischer Signale zu erzeugen, wobei jeder der n Kanäle optischer Signale eine der n Wellenlängen aufweist; und
eine zweite Breitspektrum-Laserquelle, die mit dem ersten AWG verbunden ist, die konfiguriert ist, ein optisches Reserve-Breitspektrum-Signal für das AWG bereitzustellen, wenn die erste Breitspektrum-Laserquelle versagt;
wobei das OLT ferner konfiguriert ist, eine Anforderung von einer ONU zu erfassen,
einer Multicast-Gruppe beizutreten, die Funktion eines Multicast-Agenten zu implementieren, in dem das OLT eine Authentifizierung durchführt, gemäß dem Resultat der Authentifizierung festzustellen, ob die ONU das Recht hat, Daten der angeforderten Multicast-Gruppe zu empfangen, und gemäß dem Resultat der Feststellung eine Multicast-Dienststeuermeldung an die ONU zu senden.

4. OLT nach Anspruch 3, wobei das OLT ferner Folgendes aufweist:
einen Abwärtsstreckendatentrenner, der mit dem Multicast-Datenübertragungsvorverarbeitungsmodul verbunden ist, wobei der Abwärtsstreckendatentrenner konfiguriert ist, die Abwärtsstreckendienstdaten abzutrennen, um die Multicast-Dienstdaten, die broadcast-übertragen oder multicast- übertragen werden sollen, und
die Abwärtsstrecken-Unicast-Daten zu erhalten, die jeweils an die n ONU übertragen werden sollen.

5. Optische Netzwerkeinheit, ONU, **dadurch gekennzeichnet, dass** sie Folgendes aufweist:
einen Grob-Wellenlängendemultiplexer, CWDM, der konfiguriert ist, einen Kanal eines optischen Signals, das mindestens zwei Wellenlängen aufweist, aus dem optischen Abwärtsstreckensignal in eine erste Wellenlänge der mindestens zwei Wellenlängen, die Abwärtsstrecken-Unicast-Daten führt, und eine spezifische Wellenlänge der mindestens zwei Wellenlängen, die Multicast-Dienstdaten befördert,
aufzuteilen;
mindestens zwei Photodioden, wobei eine erste Photodiode der mindestens zwei Photodioden konfiguriert ist, ein optisches Signal, das die erste Wellenlänge aufweist, vom CWDM in ein erstes elektrisches Signal umzuwandeln, und eine zweite Photodiode der mindestens zwei Photodioden konfiguriert ist, ein optisches Signal, das die spezifische Wellenlänge aufweist, in ein zweites elektrisches Signal umzuwandeln; und
mindestens zwei Demodulatoren, wobei ein erster Demodulator der mindestens zwei Demodulatoren konfiguriert ist, das erste elektrische Signal zu demodulieren, um die Abwärtsstrecken-Unicast-Daten für die ONU zu erhalten, und ein zweiter Demodulator der mindestens zwei Demodulatoren konfiguriert ist, das zweite elektrische Signal zu demodulieren, um die Multicast-Dienstdaten zu erhalten;
und **dadurch gekennzeichnet ist, dass** die ONU ferner konfiguriert ist, Multicast-Dienstdaten, deren Empfang durch die ONU von einem optischen Leitungsendgerät, OLT, erlaubt ist, gemäß einer vom OLT gesendeten Multicast-Dienststeuermeldung zu filtern, und Multicast-Dienstdaten zu verwerfen, deren Empfang durch die ONU vom OLT nicht erlaubt ist.

6. ONU nach Anspruch 5, die ferner einen zweiten optischen Zirkulator und ein ONU-Aufwärtsstrecken-Verarbeitungsmodul aufweist; wobei
das ONU-Aufwärtsstrecken-Verarbeitungsmodul konfiguriert ist, Aufwärtsstreckendaten auf ein optisches Signal zu modulieren, das eine entsprechende Wellenlänge aufweist;
der zweite optische Zirkulator, der mit einem Multiplexer/Demultiplexer, dem CWDM und dem ONU-Aufwärtsstrecken-Verarbeitungsmodul verbunden ist, konfiguriert ist, den Kanal des optischen Signals, das mindestens zwei Wellenlängen aufweist, aus einem optischen Abwärtsstreckensignal, das vom Multiplexer/Demultiplexer empfangen wird, an den Grob-Wellenlängendemultiplexer auszugeben und ein optisches Aufwärtsstreckensignal aus dem ONU-Aufwärtsstrecken-Verarbeitungsmodul an den Multiplexer/Demultiplexer auszugeben.

7. Verfahren zum Implementieren eines Dienstes in einem passiven optischen Netzwerk, PON, mit:
einem optischen Leitungsendgerät, OLT, das einen Kanal optischer Abwärtsstreckensignale, die mindestens zwei Wellenlängen aufweisen, an einen Multiplexer/Demultiplexer überträgt, wobei ein erstes optisches Abwärtsstreckensignal, das eine erste Wellenlänge von mindestens zwei Wellenlängen aufweist, mit Abwärtsstrecken-Unicast-Daten moduliert wird, und ein zweites optisches Abwärtsstreckensignal, das eine spezifische Wellenlänge der mindestens zwei Wellenlängen aufweist, mit Multicast-Dienstdaten moduliert wird;
n ONU, die optische Signale vom Multiplexer/Demultiplexer empfangen, wobei die optischen Signale, die durch jeweils mindestens zwei der n ONU empfangen werden,
ein optisches Signal aufweisen, das die spezifische Wellenlänge aufweist, die mit Multicast-Dienstdaten moduliert wird, und die ONU, die die optischen Signale empfängt, die die spezifische Wellenlänge aufweisen, die mit Multicast-Dienstdaten moduliert werden, die Multicast-Dienstdaten zurückgewinnt;
**dadurch gekennzeichnet, dass** es ferner Folgendes aufweist:
Erfassen durch das OLT einer Anforderung von einer ONU, einer Multicast-Gruppe beizutreten, Implementieren der Funktion eines Multicast-Agenten, in dem das OLT eine Authentifizierung durchführt, Feststellen gemäß dem Resultat der Authentifizierung, ob die ONU das Recht hat, Daten der angeforderten Multicast-Gruppe zu empfangen, und Senden gemäß dem Resultat der Feststellung einer Multicast-Dienststeuermeldung an die ONU; und
Filtern durch die ONU der Multicast-Dienstdaten, deren Empfang durch die ONU vom OLT erlaubt ist, gemäß der Multicast-Dienststeuermeldung vom OLT und
Verwerfen der Multicast-Dienstdaten, deren Empfang durch die ONU vom OLT nicht erlaubt ist.

8. Verfahren zum Implementieren eines Multicast-Dienstes nach Anspruch 7, das ferner Folgendes aufweist:
Empfangen durch das OLT von einem übergeordneten Gerät eines optischen Signals, das eine zweite Wellenlänge aufweist, das ein CATV-Broadcast-Signal führt, Verstärken des empfangenen optischen Signals, das die zweite Wellenlänge aufweist, durch einen optischen Verstärker, und Übertragen des verstärkten optischen Signals,
das die zweite Wellenlänge aufweist, an den Multiplexer/Demultiplexer; Übertragen einer Broadcast-Steuermeldung an die ONU, um zu verbieten, dass die ONU das CATV-Broadcast-Signal empfängt, oder um zuzulassen, dass die ONU das CATV-Broadcast-Signal empfängt;
Empfangen durch jeweils mindestens zwei der n ONU optischer Signale, die ein optisches Signal aufweisen, das die zweite Wellenlänge aufweist, und
Zurückgewinnen des CATV-Broadcast-Signals, wobei nach dem Empfangen der Broadcast-Steuermeldung, falls die Broadcast-Steuermeldung verbietet, dass die ONU das CATV-Broadcast-Signal empfängt, die ONU einen Optisch-/Elektrisch-Wandler ausschaltet, um das CATV-Broadcast-Signal nicht zu empfangen, und falls die Broadcast-Steuermeldung erlaubt, dass die ONU das CATV-Broadcast-Signal empfängt, die ONU den Optisch-/Elektrisch-Wandler einschaltet, um das CATV-Broadcast-Signal zu empfangen.

## Revendications

1. Système de réseau optique passif (PON) comprenant un terminal de ligne optique (OLT), un multiplexeur/démultiplexeur et n unités de réseau optique (ONU), n étant un nombre naturel, dans lequel :
l'OLT est conçu pour moduler et transmettre des signaux optiques aval, lesquels signaux optiques aval comprennent un signal optique aval possédant au moins une première longueur d'onde modulée par des données unicast aval et un signal optique aval ayant une longueur d'onde spécifique modulée par des données de service multicast, **caractérisé en ce que** l'OLT est également conçu pour capturer une requête pour joindre un groupe multicast depuis une ONU, mettre en oeuvre la fonction d'un agent multicast dans laquelle l'OLT effectue une authentification, déterminer si l'ONU a le droit de recevoir des données depuis le groupe multicast demandé en fonction du résultat de l'authentification, et envoyer un message de commande de service multicast à l'ONU en fonction du résultat de la détermination ;
le multiplexeur/démultiplexeur est conçu pour diviser les signaux optiques aval reçus de l'OLT de manière à obtenir un signal optique ayant une longueur d'onde spécifique, et émettre plusieurs canaux de signaux optiques ayant la longueur d'onde spécifique en divisant la puissance sur les signaux optiques obtenus ayant la longueur d'onde spécifique ; et
au moins une des n ONU est conçue pour recevoir des signaux optiques depuis le multiplexeur/démultiplexeur et récupérer les données de service multicast à partir d'un signal optique reçu ayant la longueur d'onde spécifique, filtrer les données de service multicast que l'OLT permet à l'ONU de recevoir, en fonction du message de commande de service multicast de l'OLT, et rejeter les données de service multicast que l'OLT ne permet pas à l'ONU de recevoir.

2. Système PON selon la revendication 1, dans lequel l'OLT est en outre configuré de manière à recevoir, depuis un équipement supérieur, un signal optique ayant une seconde longueur d'onde qui transporte un signal de diffusion CATV, amplifier le signal optique reçu ayant la seconde longueur d'onde à l'aide d'un amplificateur optique, et transmettre le signal optique amplifié ayant la seconde longueur d'onde vers le multiplexeur/démultiplexeur.

3. Terminal de ligne optique (OLT) comprenant :
un module de prétraitement de transmission de données multicast conçu pour moduler des données de service multicast sur un signal optique ayant une première longueur d'onde;
n modulateurs, chacun des n modulateurs étant conçu pour moduler des données unicast aval à transmettre vers une ONU sur un signal optique ayant une de n longueurs d'onde, n étant un nombre naturel supérieur ou égal à 1 et la longueur d'onde n étant différente de la première longueur d'onde ;
un multiplexeur/démultiplexeur conçu pour multiplexer le signal optique modulé issu du module de prétraitement de transmission de données multicast et les signaux optiques modulés issus des n modulateurs;
**caractérisé en ce qu'**il comprend en outre :
une source laser à large spectre conçue pour générer un signal optique à large spectre ;
un premier réseau sélectif planaire (AWG) connecté aux n seconds modulateurs, le premier AWG étant conçu pour diviser le signal optique à large spectre issu de la première source laser à large spectre afin de générer n canaux de signaux optiques,
chacun des n canaux de signaux optiques ayant une des n longueurs d'onde ; et
une seconde source laser à large spectre connectée au premier AWG, et conçue pour fournir un signal optique à large spectre de secours pour l'AWG lors d'une défaillance de la première source laser à large spectre ;
l'OLT étant en outre conçu pour capturer une requête pour joindre un groupe multicast depuis une ONU, mettre en oeuvre la fonction d'un agent multicast dans laquelle l'OLT effectue une authentification, déterminer si l'ONU a le droit de recevoir des données depuis le groupe multicast demandé en fonction du résultat de l'authentification, et envoyer un message de commande de service multicast à l'ONU en fonction du résultat de la détermination.

4. OLT selon la revendication 3, lequel OLT comprend en outre :
un séparateur de données aval connecté au module de prétraitement de transmission de données multicast, lequel séparateur de données aval est conçu pour séparer les données de service aval afin d'obtenir les données de service multicast devant être diffusées ou diffusées en multicast et les données unicast aval devant respectivement être transmises aux n ONU.

5. Unité de réseau optique (ONU), **caractérisée en ce qu'**elle comprend :
un démultiplexeur en longueur d'onde grossier (CWDM) conçu pour diviser un canal d'un signal optique ayant au moins deux longueurs d'onde depuis le signal optique aval, une première longueur d'onde desdites au moins deux longueurs d'onde transportant des données unicast aval, et une longueur d'onde spécifique desdites au moins deux longueurs d'onde transportant des données de service multicast ;
au moins deux photodiodes, une première photodiode desdites au moins deux photodiodes étant conçue pour convertir un signal optique ayant la première longueur d'onde du CWDM en un premier signal électrique, et la seconde photodiode desdites au moins deux photodiodes étant conçue pour convertir un signal optique ayant la longueur d'onde spécifique en un second signal électrique; et
au moins deux démodulateurs, un premier démodulateur desdits au moins deux démodulateurs étant conçu pour démoduler le premier signal électrique afin d'obtenir les données unicast aval pour l'ONU, et un second démodulateur desdits au moins deux démodulateurs étant conçu pour démoduler le second signal électrique afin d'obtenir les données de service multicast ;
et **caractérisée en ce que** l'ONU est en outre conçue pour filtrer les données de service multicast que le terminal de ligne optique (OLT) permet à l'ONU de recevoir en fonction d'un message de commande de service multicast envoyé de l'OLT, et
rejeter les données de service multicast que l'OLT ne permet pas à l'ONU de recevoir.

6. ONU selon la revendication 5, comprenant en outre un second circulateur optique et un module de traitement amont d'ONU, dans lequel :
le module de traitement amont d'ONU est conçu pour moduler des données amont sur un signal optique ayant une longueur d'onde correspondante ; et
le second circulateur optique, qui est connecté à un multiplexeur/démultiplexeur, au CWDM et au module de traitement amont d'ONU, est conçu pour émettre le canal d'un signal optique ayant au moins deux longueurs d'onde à partir d'un signal optique aval reçu du multiplexeur/démultiplexeur vers le démultiplexeur en longueur d'onde grossier, et émettre un signal optique amont depuis le module de traitement amont d'ONU vers le multiplexeur/démultiplexeur.

7. Procédé de mise en oeuvre d'un service dans un réseau optique passif (PON), consistant à :
transmettre avec un terminal de ligne optique (OLT) un canal de signaux optiques aval ayant au moins deux longueurs d'onde vers un multiplexeur/démultiplexeur, un premier signal optique aval ayant une première longueur d'onde parmi lesdites au moins deux longueurs d'onde, modulée par des données unicast aval, et un second signal optique aval ayant une longueur d'onde spécifique parmi lesdites au moins deux longueurs d'onde, modulée par des données de service multicast ; n ONU recevant les signaux optiques du multiplexeur/démultiplexeur, les signaux optiques reçus par chacune d'au moins deux des n ONU comprenant un signal optique ayant la longueur d'onde spécifique modulée par des données de service multicast, et l'ONU recevant les signaux optiques ayant la longueur d'onde spécifique modulée par des données de service multicast récupérant les données de service multicast ;
**caractérisé en ce qu'**il consiste en outre à :
capturer avec l'OLT une requête pour joindre un groupe multicast depuis une ONU,
mettre en oeuvre la fonction d'un agent multicast dans laquelle l'OLT effectue une authentification, déterminer si l'ONU a le droit de recevoir des données depuis le groupe multicast demandé en fonction du résultat de l'authentification, et envoyer un message de commande de service multicast à l'ONU en fonction du résultat de la détermination ; et
filtrer avec l'ONU les données de service multicast que l'OLT permet à l'ONU de recevoir en fonction du message de commande de service multicast de l'OLT, et
rejeter les données de service multicast que l'OLT ne permet pas à l'ONU de recevoir.

8. Procédé de mise en oeuvre d'un service multicast selon la revendication 7, consistant en outre à :
au niveau de l'OLT, recevoir, depuis un équipement supérieur, un signal optique ayant une seconde longueur d'onde qui transporte un signal de diffusion CATV,
amplifier le signal optique reçu ayant la seconde longueur d'onde à l'aide d'un amplificateur optique, et transmettre le signal optique amplifié ayant la seconde longueur d'onde vers le multiplexeur/démultiplexeur ; transmettre un message de commande de diffusion à l'ONU afin d'empêcher l'ONU de recevoir le signal de diffusion CATV ou de permettre à l'ONU de recevoir le signal de diffusion CATV ;
recevoir au niveau de chacune d'au moins deux des n ONU les signaux optiques comprenant un signal optique ayant la seconde longueur d'onde et récupérer le signal de diffusion CATV, dans lequel après réception du message de commande de diffusion, si le message de commande de diffusion empêche l'ONU de recevoir le signal de diffusion CATV, l'ONU arrête un convertisseur optique/électrique afin de ne pas recevoir le signal de diffusion CATV tandis que, si le message de commande de diffusion permet à l'ONU de recevoir le signal de diffusion CATV, l'ONU met en marche le convertisseur optique/électrique afin de recevoir le signal de diffusion CATV.
